(19) Europäisches Patentamt
European Patent Office
Office européen des brevets

(11) **EP 3 086 185 A1**

(12) **EUROPEAN PATENT APPLICATION**
published in accordance with Art. 153(4) EPC

(43) Date of publication:
**26.10.2016 Bulletin 2016/43**

(21) Application number: **14902887.0**

(22) Date of filing: **26.09.2014**

(51) Int Cl.:
*G03H 1/04* $^{(2006.01)}$   *G03H 1/22* $^{(2006.01)}$
*G03B 35/00* $^{(2006.01)}$   *G02B 27/22* $^{(2006.01)}$

(86) International application number:
**PCT/CN2014/087594**

(87) International publication number:
**WO 2016/045104 (31.03.2016 Gazette 2016/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **AFC Technology Co., Ltd.**
**Guangdong 518104 (CN)**

(72) Inventors:
 • **FAN, Cheng**
  **Shenzhen, Guangdong 518104 (CN)**
 • **CAI, Zhisen**
  **Shenzhen, Guangdong 518104 (CN)**
 • **JIANG, Chaochuan**
  **Shenzhen, Guangdong 518104 (CN)**

(74) Representative: **Beetz & Partner mbB**
**Patentanwälte**
**Steinsdorfstraße 10**
**80538 München (DE)**

(54) **HOLOGRAPHIC THREE-DIMENSIONAL DISPLAY SYSTEM AND METHOD**

(57)    A holographic three-dimensional display system and a holographic three-dimensional display method are disclosed. Plane pixel information (J*K*M*N) of the flat panel display is reasonably used to convert the discrete spatial spectrum image information $I_{mn}$ into the discrete spatial spectrum image $S_{jk}$ by using holographic coding conversion, the discrete spatial spectrum thereof is restored by using corresponding lens arrays, and the discrete spectrum widening of the sampling angle $\omega_{mn}$ is realized by the holographic function screen so as to realize complete spatial spectrum restoring of an original three-dimensional space. By using the lens arrays and the holographic function screen, an inherent conflict between the imaging quality of a microlens array and the resolution of a displayed three-dimensional image in integration photography is effectively overcome, and eye visible perfect true three-dimensional display is realized, thereby obtaining eye visible prefect true three-dimensional display.

FIG.7

EP 3 086 185 A1

## Description

## BACKGROUND OF THE INVENTION

PCT International Applications WO2010/072065, WO2010/072066 and WO2010/072067 are incorporated herein by reference in its entirety.

## Field of the Invention

The present invention relates to a holographic three-dimensional display system and method.

## Related Arts

Integrated photography (APPLIED OPTICS/Vol.52, No.4/1 February 2013) is theoretically an ideal three-dimensional light field collecting and display technology, but an inherent conflict between the imaging quality of a microlens array and the resolution of a displayed three-dimensional image is hard to overcome, namely, high resolution three-dimensional display requires the microlens array of a more fine size, but a microlens is too small and difficultly ensures subimage imaging quality of each lens, and a satisfactory true three-dimensional display effect is hard to obtain as so far. WO2010/072065, WO2010/072066 and WO2010/072067 disclose a real time color holographic three-dimensional display system and method, which use a digital holographic principle to realize eye visible true three-dimensional display by a common photography-projection apparatus array system and a holographic function screen. But in an actual operation process, matching and control over the imaging quality of each single photography-projection device and the anchoring and calibrating of the array photography-projection apparatus cause difficulty to system integration; and meanwhile, massive use of a photography-projector will certainly increase a manufacturing cost of the system and is thus not likely to be accepted by common consumers.

## SUMMARY

Aiming at the defects of the prior art, the present application provides holographic three-dimensional display system and method.

In order to realize the object above, the present application adopts following technical solutions:

a holographic three-dimensional display system comprises a spatial spectrum parallel collecting apparatus, a spatial spectrum holographic coding apparatus and a discrete spatial spectrum restoring apparatus;

the spatial spectrum parallel collecting apparatus includes:

an information collecting lens array panel having M*N lenses with parallel optical axes, wherein, M and N are integers larger than 1, the information collecting lens array panel is used for performing M*N spatial spectrum image $I_{mn}$ sampling collecting on an object O to be three-dimensionally displayed, m is from 1 to M, n is from 1 to N, a spatial sampling angle is $\omega_{mn}=d_1/l_1$, d1 is a center distance between all lenses and $l_1$ is a distance between the information collecting lens array panel and the object O;

a photosensitive element array, which is arranged at one side of the information collecting lens array panel opposite to the object, has M*N photosensitive elements, and is used for recording the spatial spectrum image $I_{mn}$ collected by each lens, wherein a resolution of each photosensitive element is not smaller than a preset number J*K of hoxels $H_{jk}$ of the object O in an object space, J and K are integers larger than 1, and the spatial spectrum image $I_{mn}$ is represented as $I_{mn}(j, k)$, j is from 1 to J and k is from 1 to K;

the spatial spectrum holographic coding apparatus performs holographic coding on M*N spatial spectrum image $I_{mn}(j, k)$, wherein for one hoxel $H_{jk}$ of the object O, the (j,k)th pixel $P_{mnjk}$ in each spatial spectrum image $I_{mn}(j,k)$ is sequentially combined into one M*N array image $S_{jk}$ as a holographic coding image of the hoxel $H_{jk}$, and in this way, the spatial spectrum holographic coding image $S_{jk}(m, n)$ of the J*K hoxels of the object O is obtained;

the discrete spatial spectrum restoring apparatus includes:

a flat panel display, used for displaying the J*K spatial spectrum holographic coding image $S_{jk}(m, n)$ subjected to proper zooming, and having a resolution not lower than M*N*J*K;

an information restoring lens array panel, having J*K lenses with parallel optical axes and consistent imaging parameters, and used for restoring each spatial spectrum holographic coding image $S_{jk}(m, n)$ on the flat panel display into a three-dimensional image O' consisting of a discrete spatial spectrum $I_{mn}(j, k)$ of the object O;

a holographic function screen, which is arranged at one side of the information restoring lens array panel opposite to the flat panel display, wherein the holographic function screen has a regularly distributed micro spatial structure, which causes each spatial spectrum holographic coding im-

age $S_{jk}(m, n)$ incident to the holographic function screen to have a corresponding spatial widening output, and a widening angle of each spatial spectrum holographic coding image $S_{jk}(m, n)$ is the spatial sampling angle $\omega mn$, thereby causing each spatial spectrum holographic coding image $S_{jk}(m, n)$ to be joined with each other without overlapping coverage, so as to form a complete continuous spatial spectrum output,

wherein, the spatial sampling angle $\omega_{mn}=d_1/l_1=d_2/l_2$, $d_2$ is a center distance between all lenses of the information restoring array panel and $l_2$ is a distance between the information restoring lens array panel and the holographic function screen.

Further, the holographic three-dimensional display system further comprises an information collecting field diaphragm between the information collecting lens array panel and the photosensitive element, so as to reduce or eliminate imaging interference among respective lenses of the information collecting lens array panel.

Further, the holographic three-dimensional display system further comprises a restoring field diaphragm between the information restoring lens array panel and the holographic function screen so as to eliminate or reduce the imaging interference between all lenses of the information restoring lens array panel.

Further, a field of view $\Omega$ between each lens of the information collecting lens array panel and each lens of the information restoring lens array panel is equal, $\tan(\Omega/2)= a_1/2f_1= az/2fz$, wherein $a_1$ is the aperture of each lens of the information collecting lens array panel, $f_1$ is a focus length of the each lens of the information collecting lens array panel, $a_2$ is the aperture of the information restoring lens array panel, and $f_2$ is a focus length of the information restoring lens array panel.

Further, a distance between the holographic function screen and the information collecting lens array panel is equal to a distance between a reference surface $P_R$ in an object space of the hoxels of the object O and the object O or the zoomed in or zoomed out distance between the reference surface $P_R$ and the object O.

Further, the center of the information collecting lens array panel at least has a lens capable of collecting a panorama of the object.

Further, each lens of the information restoring lens array panel is in a cellular array manner.

A holographic three-dimensional display method comprises a spatial spectrum parallel collecting process, a spatial spectrum holographic coding process and a discrete spatial spectrum restoring process; the spatial spectrum parallel collecting process includes following steps:

performing M*N spatial spectrum image $I_{mn}$ sampling collecting on an object O to be three-dimensionally displayed by an information collecting lens array panel, wherein the information collecting lens array panel has M*N lenses with parallel optical axes and consistent imaging parameters, M and N are integers larger than 1, m is from 1 to M, n is from 1 to N, a spatial sampling angle is $\omega_{mn}=d_1/l_1$, d1 is a center distance between all lenses and $l_1$ is a distance between the information collecting lens array panel and the object O;

recording the spatial spectrum image $I_{mn}$ collected by each lens through a photosensitive element array, wherein the photosensitive element array is arranged at one side of the information collecting lens array panel opposite to the object and has M*N photosensitive elements, a resolution of each photosensitive element is not smaller than a preset number J*K of hoxels $H_{jk}$ of the object O in an object space, J and K are integers larger than 1, and the spatial spectrum image $I_{mn}$ is represented as $I_{mn}(j, k)$, j is from 1 to J and k is from 1 to K;

the spatial spectrum holographic coding process comprises a step: performing holographic coding on M*N spatial spectrum image $I_{mn}(j, k)$, wherein for one hoxel $H_{jk}$ of the object O, the (j,k)th pixel $P_{mnjk}$ in each spatial spectrum image $I_{mn}(j,k)$ is sequentially combined into one M*N array image $S_{jk}$ as a holographic coding image of the hoxel $H_{jk}$, and in this way, the spatial spectrum holographic coding image $S_{jk}(m, n)$ of the J*K hoxels of the object O is obtained;

the discrete spatial spectrum restoring process includes following steps:

displaying the J*K spatial spectrum holographic coding image $S_{jk}(m, n)$ subjected to proper zooming by a flat panel display, wherein the flat panel display has a resolution not lower than M*N*J*K;

restoring each spatial spectrum holographic coding image $S_{jk}(m, n)$ on the flat panel display into a three-dimensional image O' consisting of a discrete spatial spectrum $I_{mn}(j, k)$ of the object O by an information restoring lens array panel, wherein the information restoring lens array panel has J*K lenses $a_2$ with parallel optical axes and consistent imaging parameters; and

causing each spatial spectrum holographic coding image $S_{jk}(m, n)$ incident to the holographic function screen to have a corresponding spatial widening output by a holographic function screen which is arranged at one side of the information restoring lens array panel opposite to the flat panel display and has a regularly distributed micro spatial structure, wherein a widening angle of each spatial spectrum holographic coding image $S_{jk}(m, n)$ is the spatial sampling angle $\omega_{mn}$, thereby causing each spatial spectrum holographic coding image $S_{jk}(m, n)$ to be joined with each other without overlapping coverage, so as to form a complete continuous spatial spectrum output,

wherein, the spatial sampling angle $\omega_{mn}=d_1/l_1=d_2/l_2$, $d_2$ is a center distance between all lenses of the information restoring array panel and $l_2$ is a distance between the information restoring lens array panel and the holographic function screen.

Further, the holographic three-dimensional display method further comprises a following step: eliminating or reducing imaging interference among respective lenses of the information collecting lens array panel by an information collecting field diaphragm between the information collecting lens array panel and the photosensitive element.

Further, the holographic three-dimensional display method further comprises a following step: eliminating or reducing imaging interference between all lenses of the information restoring lens array panel by a restoring field diaphragm between the information restoring lens array panel and the holographic function screen.

Further, a field of view $\Omega$ between each lens of the information collecting lens array panel and each lens of the information restoring lens array panel is equal, $\tan(\Omega/2)= a_1/2f_1= a_2/2f_2$, wherein $a_1$ is the aperture of each lens of the information collecting lens array panel, $f_1$ is a focus length of the each lens of the information collecting lens array panel, $a_2$ is the aperture of the information restoring lens array panel, and $f_2$ is a focus length of the information restoring lens array panel.

Further, a distance between the holographic function screen and the information collecting lens array panel is equal to a distance between a reference surface $P_R$ in an object space of the hoxels of the object O and the object O or the zoomed in or zoomed out distance between the reference surface $P_R$ and the object O.

Further, the center of the information collecting lens array panel at least has a lens capable of collecting a panorama of the object.

Further, each lens of the information restoring lens array panel is in a cellular array manner.

According to the present application, by using the lens arrays and the holographic function screen, an inherent conflict between the imaging quality of a microlens array and the resolution of a displayed three-dimensional image in integration photography is effectively overcome, eye visible perfect true three-dimensional display is realized, and it is equivalent to that each photography-projection apparatus in WO2010/072067 is anchored at infinity. One key point is that plane pixel information (J*K*M*N) of the flat panel display is reasonably used to convert the discrete spatial spectrum image information $I_{mn}$ into the discrete spatial spectrum image $S_{jk}$ by using holographic coding conversion, the discrete spatial spectrum thereof is restored by using corresponding lens arrays, and the discrete spectrum widening of the sampling angle $\omega_{mn}$ is realized by the holographic function screen in WO2010/072067 so as to realize complete spatial spectrum restoring of an original three-dimensional space.

(1) the spatial spectrum digital holographic coding $S_{jk}$ of certain hoxel $H_{jk}$ in an original space is obtained by using the collected spatial spectrum image $I_{mn}$, spectrum-image coordinate conversion is effectively realized, and according to a fake visual defect of the traditional integration photography, the discrete spatial spectrum restoring of the original space is perfectly realized.

(2) the coding is suitable for a three-dimensional restoring system of any form, the generated holographic coding image $S_{jk}(m, n)$ can be directly applied to lens array imaging, or used as hagel input of a Fourier transform hologram for performing three-dimensional image printing point by point.

(3) by simply zooming the spatial spectrum image $S_{jk}$, the size of any hoxel Hjk can be freely changed to realize the zooming in or out display of a three-dimensional object.

(4) a maximal spatial spectrum sampling angle $\omega_{mn}$ required by completely restoring the space is designed according to specific requirements (such as resolution, field depth and observation angle), thus perfectly restoring the displayed three-dimensional space with the least spatial spectrum number (M, N).

## BRIEF DESCRIPTION OF THE DRAWINGS

FIG. 1 is a schematic diagram of spatial spectrum parallel collecting according to an embodiment of the present application;

FIG. 2 is a schematic diagram of spatial spectrum images collected by anchoring in WO2010/072065, WO2010/072066 and WO2010/072067, wherein the position of a reference point R in each spatial spectrum image is same;

FIG. 3 is a schematic diagram of a spatial spectrum image parallelly collected by an embodiment of the present application, wherein a reference point $R_{mn}$ is moved in parallel by a bit image factor $\delta_{mn}$ relative to FIG. 2;

FIG. 4 is a schematic diagram of a holographic coding image $S_{jk}$ of a hoxel $H_{jk}$ according to an embodiment of the present application;

FIG. 5 is a schematic diagram of complete discrete spatial spectrum coding of a three-dimensional object O according to an embodiment of the present application;

FIG. 6 is a schematic diagram of discrete spatial spectrum restoring according to an embodiment of the present application;

FIG. 7 is a schematic diagram of decoding reappearing of a holographic function screen according to an embodiment of the present application;

FIG. 8 is a schematic diagram of lens arraying according to an embodiment of the present application;

FIG. 9 is a schematic diagram of a holographic spatial spectrum according to an application example of the present application;

FIG. 10 is pictures of three-dimensional display of an application example shot in upper, lower, left and right directions; and

FIG. 11 is a schematic diagram of a holographic three-dimensional display system according to an embodiment of the present application.

## DETAILED DESCRIPTION

The embodiments of the present application are described in further detail below with reference to the accompanying drawings. Although the present application is described, following examples are provided to specifically explain and clearly understand the embodiments of the present application. It is obvious for persons of ordinary skill in the art that certain change and modification can be made on these described embodiments and such change and modification do not depart from the spirit of the present application.

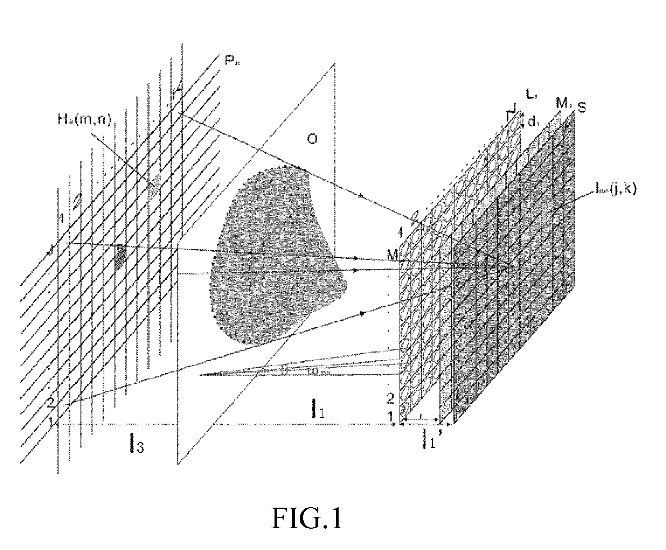

Referring to FIG. 1, FIG. 7 and FIG. 11, according to an embodiment of the present application, a holographic three-dimensional display system comprises a spatial spectrum parallel collecting apparatus 100, a spatial spectrum holographic coding apparatus 200 and a discrete spatial spectrum restoring apparatus 300.

FIG. 1 illustrates that the spatial spectrum parallel collecting apparatus performs spatial spectrum information collecting. The spatial spectrum parallel collecting apparatus comprises an information collecting lens array panel $L_1$ and a photosensitive element array S. The information collecting lens array panel $L_1$ is a lens array panel consisting of M*N small lenses with consistent imaging parameters, and optical axes of all lenses are parallel. Each lens has an aperture of $a_1$, a focus length of $f_1$ and a center distance of $d_1$, and a field of view of each single lens is $\Omega$ and meets tan $(\Omega/2) = a_1/2 f_1$. For a three-dimensional object O in the effective visual angle $\Omega$ of each single lens, spatial spectrum information $I_{mn}$(m is from 1 to M and n is from 1 to N) collected by each lens is same as that described in WO2010/072065, WO2010/072066 and WO2010/072067, and a sampling angle is $\omega_{mn}=d_1/l_1$, wherein, $l_1$ is a distance between the information collecting lens array panel $L_1$ and the object O.

The photosensitive element array S can adopt a color film, CCD, CMOS etc. The photosensitive element array S can be placed at a position, away from the lens array panel by $l_1$', nearby a rear focus point of the lens array panel $L_1$, to record the spatial spectrum information $I_{mn}$ (j, k) collected by each lens, and $l_1$ are $l_1$' in an object image conjugation relation of each single lens. The resolution of each photosensitive element is not smaller than a preset number J*K of hoxels $H_{jk}$ of the object O in an object space, J and K are integers larger than 1, j is from 1 to J and k is from 1 to K. The object spatial hoxel corresponding to the object O is $H_{jk}$, that is: the collected three-dimensional object O consists of hoxels (Hoxel) $H_{jk}$. A distance between a reference plane $P_R$ of the hoxels $H_{jk}$ and the object O is $l_3$, and a reference point R is located at the center position of the reference plane. In order to prevent mutual interference of information obtained by each lens on the photosensitive element array S, a field diaphragm $M_1$ is arranged between the photosensitive element array S and the information collecting lens array panel $L_1$, to prevent mutual interference of imaging $I_m$ of each lens.

Compared with traditional integration photography, the lens array is not required as a microlens array, and the size $a_1$ of the aperture can be adopted as long as a clear spatial spectrum view is collected. The clear spatial spectrum view means that each pixel in a common photographic image corresponds to certain clear point in a shot three-dimensional space. It is same as a field depth concept of common photography, that is, the smaller the aperture $a_1$, the larger the field depth of the shot picture. Speaking from this angle, the smaller the $a_1$, the clearer the collected spatial spectrum view. Due to influence of an aperture diffraction effect, a resoluted minimum distance is increased, and an imaging quality is obviously reduced, which is a fundamental reason why the traditional integration photography cannot obtain a satisfactory result. In addition, the aperture $a_1$ and focus length $f_1$ of the lens decide the field of view $\Omega$ of each lens, the larger the $\Omega$, the larger a field range of a collected three-dimensional target. In WO2010/072065, WO2010/072066 and WO2010/072067, due to anchoring collecting, each lens can collect a spatial spectrum of such three-dimensional target panorama, while in parallel collecting of the present embodiment, a scene of the collected target is cut by the inherent field of view $\Omega$, therefore, the lens possibly cannot collect the spatial spectrum of the three-dimensional target panorama. In the present embodiment, at least one lens nearby by the center (M/2, N/2) of the lens array can collect the panorama of the object O (j, k) .

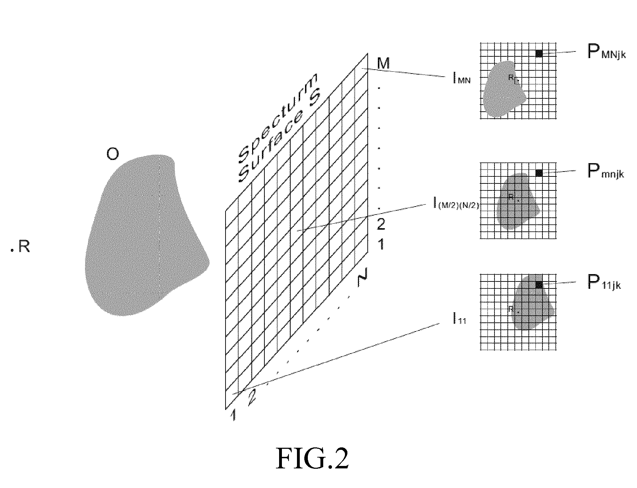

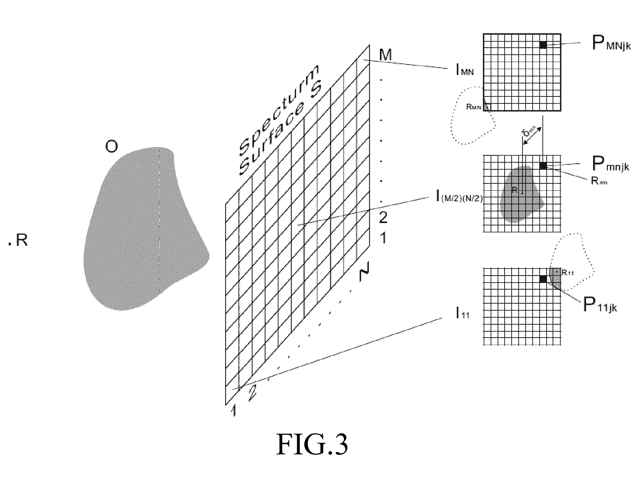

Compared with the anchoring collecting disclosed in WO2010/072065, WO2010/072066 and WO2010/072067, except the exact same I (M/2) (N/2) (j, k) of each spatial spectrum image, it is equivalent to that original anchoring collecting respective spatial spectrum images $I_{mn}$ (j, k) of other respective images are cut by the field diaphragm $M_1$ after translating by a phase factor $\delta_{mn}$ on a spectrum surface S, which causes a reference point $R_{mn}$ of the original object O to still be overlapped at the same position in the original space after imaging restoring by each lens, and $R_{nm}$ is a corresponding coordinate of a reference point R in each spatial spectrum image $I_{mn}$, and is as shown in FIG. 2 and FIG. 3. The phase factor $\delta_{mn}$ is an inherent property of the parallel collecting of the present application, and can also serve as a coordinate translating basis of the spatial spectrum image under a condition of anchoring collecting parallel playing or parallel collecting anchoring playing.

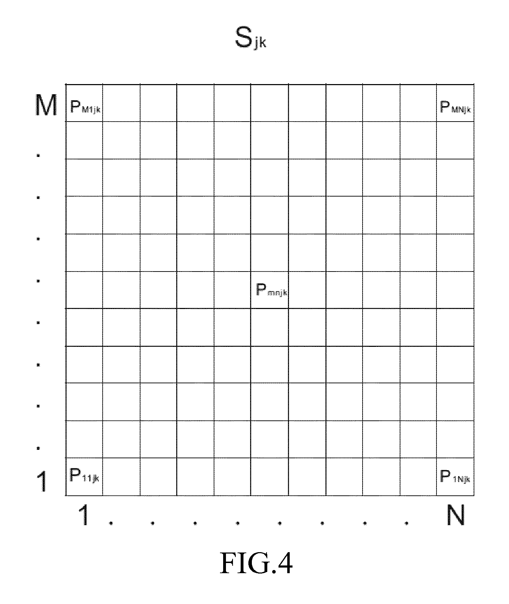

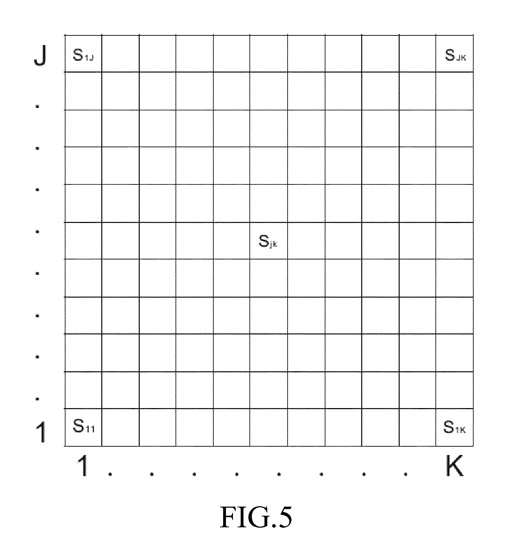

FIG. 4 and FIG. 5 illustrate a spatial spectrum holographic coding apparatus, for example a computer (not shown), which performs holographic coding on the collected M*N spatial spectrum images $I_{mn}$(j, k) with the pixels of J*K to obtain J*K spatial spectrum holographic coding images $S_{jk}$ (m, n) . A specific operation comprises: as shown in FIG. 4, filling the (j, k) th pixel $P_{mnjk}$ in the $I_{mn}$(j,k) into certain hoxel $H_{jk}$ in the original space in FIG. 1 to obtain the spatial spectrum image $S_{jk}$ of the hoxel.

As shown in FIG. 1, the collecting lens array collects the spatial spectrum from the right side of the object O, a basic principle of the traditional integration photography is to restore the collected spatial spectrum image to the object by the original lens panel, therefore, when the restored object is observed from the left side, a fake view is saw, that is, a stereo relation is opposite to that of the original object. A reference plane $P_R$ is established at the left side of the object O, a restored three-dimensional space from the reference plane $P_R$ after information coding is just the reversal of the original fake view, that is, an envisaged restored image is saw, and a stereo relation is same as that of the original object. Therefore, by the spatial spectrum image $S_{jk}$ of the original space certain hoxel $H_{jk}$ obtained by the collected spatial spectrum image $I_{mn}$ collected in FIG. 1, spectrum-image coordinate conversion can be effectively realized to eradicate the fake view defect of the original integrated photography. A meaning of the spectrum-image coordinate conversion is explained in a manner that the original M*N spatial spectrum images can be represented as the spatial spectrum view of the original object in M*N directions, and the spatial spectrum image $S_{jk}$ is the hoxel coding of these view elements in the restored space, that is, each hoxel $H_{jk}$ contains the information $S_{jk}$ of the original object in each direction.

As shown in FIG. 5, for each hoxel $H_{jk}$ in FIG.

1, the J*K spatial spectrum image $S_{jk}$ as shown in FIG. 4 are displayed on the flat panel display D after simple zooming treatment, a resolution of the flat panel display D is not smaller than M*N*J*K, thus displaying a complete discrete spatial spectrum coding pattern on the flat panel display D.

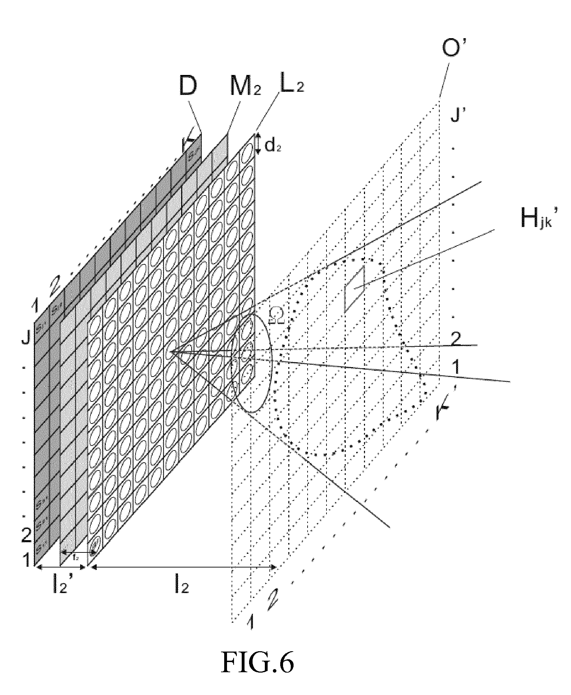

As shown in FIG. 6 to FIG. 7, the discrete spatial spectrum restoring apparatus comprises a flat panel display D, an information restoring lens array panel $L_2$ and a holographic function screen HFS. FIG. 6 illustrates that the discrete spatial spectrum restoring apparatus restores a discrete spatial spectrum. The information restoring lens array panel $L_2$ is placed at the position away from the front surface of the flat panel display D by a distance of $l_2'$. The information restoring lens array panel $L_2$ is an array lens array panel consisting of J*K small lenses with consistent imaging parameters, and each lens has an aperture of $a_2$ and a center distance of $d_2$ (which is just the size of the hoxel to be restored). A field diaphragm $M_2$ is placed between the D and the information restoring lens array lens $L_2$ to avoid the mutual interference of images of respective single lenses.

Preferably, a field of view (FOV) of each lens of the information restoring lens array panel $L_2$ is same as that of each lens of the information collecting lens array panel $L_1$ and is also $\Omega$. If the field of view is different, distortion of a thee-dimensional space will be caused. Each piece of spatial spectrum coding information $S_{jk}$ (m, n) on the flat panel display D is projected and restored by the information restoring lens array panel $L_2$ to the three-dimensional image O' consisting of the discrete spatial spectrum $I_{mn}$ (j, k) of the original three-dimensional object O, and a number of hoxels $H_{jk}'$ is J'*K' . The size of J'*K' is decided by following factors: 1. the size of each pixel in $S_{jk}$ is $\Delta_D$, that is the pixel size of the flat panel display; 2. after the $S_{jk}$ is imaged by the small lenses in the information restoring lens array panel $L_2$, the size thereof is amplified by M times, and the size of a corresponding hoxel is $M\Delta_D$ ; 3. it is assumed that the length and width of the flat panel display are a and b respectively, then, J'=a/$M\Delta_D$,K'=b/$M\Delta_D$. It can be seen that J'*K' is not directly related to the J*K, and is the number of final hoxels $H_{jk}'$ formed by accumulating the spatial spectrum coding image $S_{jk}$ projected by the hoxels $H_{jk}$ in the spatial M*N directions in an area a*b of the display, namely the final holographic display hoxel resolution. Similarly, compared with traditional integration photography, the information restoring lens array panel $L_2$ is not required to be the microlens array, the size of each lens aperture $a_2$ takes a condition of clearly restoring each spatial spectrum image $S_{jk}$ (m, n) as a principle, resolution and clear imaging $\Delta_D$ are realized, however a too small aperture $a_2$ should be avoided to avoid speckle noise. In addition, in principle, the larger the field of view $\Omega$ of each single lens, the more the number (M,N) of the clearly resoluted discrete spatial spectrums, and the larger of the field of view of a restored three-dimensional object.

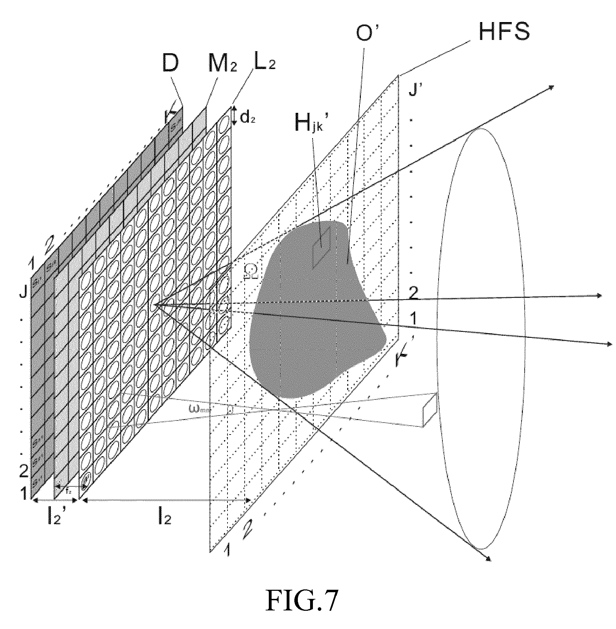

As shown in FIG. 7, in a position O' away from the information restoring lens array panel $L_2$ by a distance of $I_2$, the holographic function screen disclosed in WO2010/072065 WO2010/072066 and WO2010/072067 is placed, so that a widening angle of the holographic function screen relative to each input spatial spectrum $S_{jk}$ is the spatial sampling angle $\omega_{mn}$ as shown in FIG. 1, that is, respective discrete spatial spectrum coding $S_{jk}$ are joined with each other without overlapping (represented in a manner that the edge of each lens is just blurred to become an integral bright background), and form complete continuous spatial spectrum output, and human eyes can observe the holographic true three-dimensional image of the O' by the HFS in the field of view $\Omega$. The size of the hoxel $H_{jk}$' is just corresponding amplification of each pixel $S_{jk}$ (m, n) .

As shown in FIG. 1 and FIG. 7, the spatial sampling angle $\omega_{mn}=d_1/l_1= d_2/l_2$. In FIG. 7, $I_1$ are $I_1$' are in an object image conjugation relation of each single lens on the information restoring lens array panel $L_2$. In FIG. 6 and FIG. 7, the distance $I_2$ between the information restoring lens array panel $L_2$ and the O' of the holographic function screen and the distance $I_3$ between the reference plane $P_R$ and the object O in FIG. 1 are equal (which is not required that O' of the holographic function screen is strictly at the distance, the holographic function screen can decode nearby and only an image surface changes), or a distance b between the reference surface $P_R$ and the object O is zoomed in or out (that is the distance b corresponding to the zoomed in or out object in FIG. 1)

Imaging quality analysis

1. Spatial spectrum description of three-dimensional spatial information

It is assumed that the hoxel of a three-dimensional space is $\Delta_{jk}$, the depth of the three-dimensional space is $\Delta Z$, a corresponding spatial sampling angle is $\omega_{mn}=\Delta_{jk}/\Delta Z$. That is to say: a three-dimensional object consisting of $J^*K^*\Delta Z^*\Delta_{jk}$ independent small cubes with a volume of $\Delta_{jk}^3$ can be totally expressed by $M^*N^*J^*K$ wedge light beams, and a peak of the wedge light beams is positioned at the plane of the holographic function screen HFS, and a divergence angle is $\omega_{mn}$.

An observation field of view of the three-dimensional object is $\Omega = \displaystyle\sum_{m=1}^{M} \sum_{n=1}^{N} \omega_{mn}$ herein, $AZ^*\Delta_{jk}=\Delta_{jk}^*\Delta_{jk} /\omega_{mn}=M^*N$, since the hoxel contains $M^*N$ spatial spectrums.

2. Spatial spectrum description of eye vision

Basic parameters of eyes are as follows: (1) an interpupillary distance (average distance between two eyes): d is about 6.5mm; (2) pupil diameter (which is 2-8mm and related to brightness), an average value is a which is about 5mm; (3) an angle limit of resolution: $\omega_E$ is about $1.5^*10^{-4}$ ; and (4) a fixed point static field of view- $\Omega_E$ is about 90°.

It can seen that when positions of double eyes are fixed, an eye vision can be expressed as a double eye parallax stereoscopic image consisting of about $J^*K= (\Omega_E/\omega_E)^2 \approx [ (\pi/2) /1.5^*10^{-4}]^2 \approx 10^8$ hoxels and two spatial spectrums ($M^*N=2$) . Another physical meaning is that in nature, two hoxels $H_{left\ eye}$ and $H$ right eye at fixed positions of the eyes contain and receive the $10^8$ spatial spectrums, thus forming a three-dimensional objective knowledge of the eyes immersed in a hoxel sea for the nature.

3. Effective collecting and restoring of spatial three-dimensional information

Aiming at the spatial expressing on the visible three-dimensional spatial information described by first and second points, complete collecting can be realized by using the lens array panel as shown in FIG. 1 and complete restoring can be realized by using the lens array panel as shown in FIG. 6. Related parameters have a following relation: $a_1=2\lambda l_1/\Delta_{jk}$, $a_2=2\lambda l_2/\Delta_{jk}$, $\lambda$ is visible light average wavelength and about 550nm; $\omega_{mn}=d_1/l_1= d_2/l_2$; tan $(\Omega/2) =a_1/2f_1= a_2/2f_2$. Here, the size of the aperture of the lens decides the size $\Delta_{jk}$ of the hoxel capable of being collected and restored, a center distance of the lens decides the spatial sampling angle $\omega_{mn}$ capable of being collected and restored, thereby deciding the field of depth $\Delta Z=\Delta_{jk}/\omega_{mn}$ to be collected and restored, the focus length of the lens decides a field of view $\Omega$ of the three-dimensional spatial information, which is represented as a processing capacity of the lens unit for the three-dimensional spatial information spatial spectrum.

$$\text{Namely: } \Omega = \sum_{m=1}^{M} \sum_{n=1}^{N} \omega_{mn}$$

the key point is that the photosensitive and display device (the photosensitive element array S in FIG. 1 and the flat panel display D in FIG. 6) with corresponding resolutions are arranged to resolute and display the spatial spectrum information consisting of the $J^*K^*M^*N$ plane pixels.

Application examples

A current commercial 4K flat panel display is used to realize the total color total parallax digital holographic three-dimensional restoring displaying according to above principle, and specific display parameters are as follows: 1, a size of the hoxels $H_{jk}$'is 4mm*4mm; 2, a number of the hoxels $H_{jk}$'is J'*K'=211*118; 3, a number of spatial spectrums is $M^*N=36^*36$; and 4, an spatial observation angle is $\Omega=30°$, and a display field of depth is about 50cm.

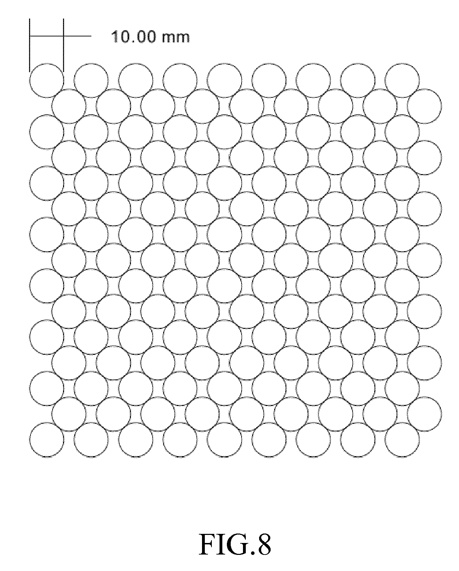

FIG. 8 is a schematic diagram of an adopted lens array, and in order to make full use of the information capacity of finite plane pixels of the display, 3818 small lenses with a diameter of 10mm are arrayed in a cellular arraying manner.

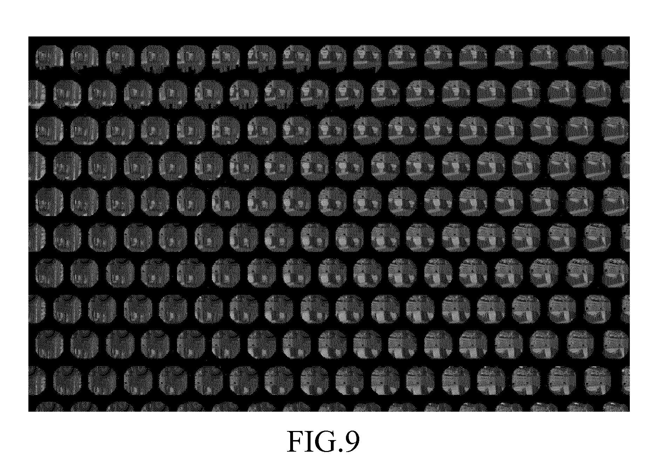

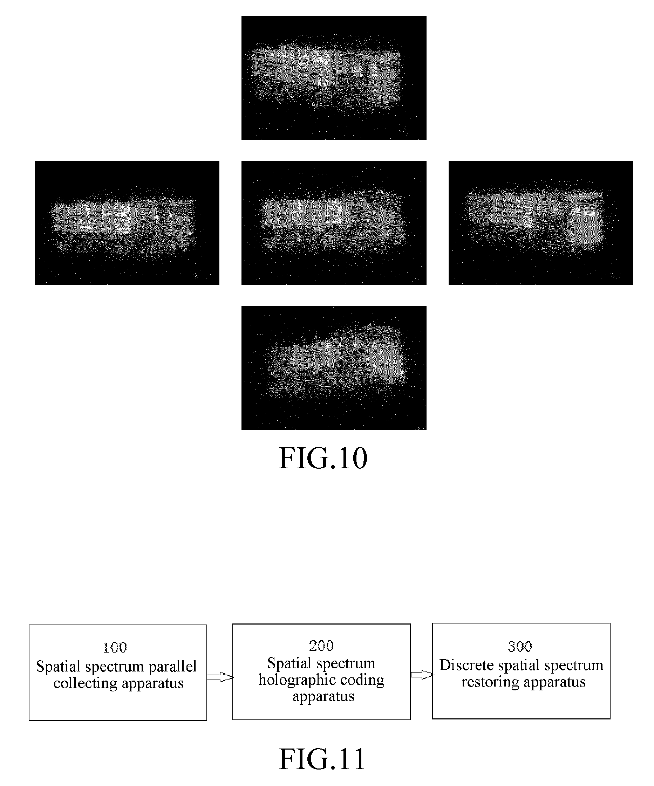

FIG. 9 is a holographic spatial spectrum coding schematic diagram in each small lens, an entity information collecting step is replaced with rendering of a computer virtual three-dimensional model, and a coding image is only limited to a head end cockpit part. FIG. 10 is pictures of three-dimensional display of a truck shot in upper, lower, left and right directions.

In order to improve display resolution, two following solutions can be used:

1, spatial splicing of a plurality of 4K displays is used for realizing large-area three-dimensional holographic display.

At current, display of 4mm hoxels is equivalent to a display resolution of an large LED screen, but the present application adopts hoxel display, and each pixel consists of M*N (36*36) light beams, thereby realizing true three-dimensional large-area display. In the present example, if same 3*4 4K screens are spliced, three-dimensional display with a plane resolution of 633*472 and display space 2.5m*1.9m*0.5m of can be obtained, and is equivalent to that 4mm$^3$ display points use build blocks in a display space.

2. High resolution holographic display realized by using high resolution flat panel display

It is easy to imagine that if a 8K, 16K and even 32K flat panel display is used, then common resolution and even high resolution holographic display can be realized by using a basic principle of the present application. Actually, when an eyepiece system of the current optical microscope is matched with a corresponding sampling angle $\omega_{mn}$, an ideal holographic three-dimensional display instrument can be manufactured.

Above described details only intend to facilitate understanding, any unnecessary should not be understood therefrom, and modification on the specification is obvious for those skilled in the art. Although the present application is described in combination with specific embodiments, but further modification should be understood, the present application intends to cover any variants, application or adjustments basically based on the principle of the present application, and comprises such extended content, that is, the content is in a known or conventional practice range of the involved field, can use the basic features provided in above specification and conforms with a range of the appended claims.

Although describing and specifically instantiating some preferable embodiments of the present application, the specification is not intended to limit the present application to such embodiments, and any such limitation is only contained in the claims.

## Claims

1.   A holographic three-dimensional display system, **characterized by** comprising a spatial spectrum parallel collecting apparatus, a spatial spectrum holographic coding apparatus and a discrete spatial spectrum restoring apparatus, wherein the spatial spectrum parallel collecting apparatus includes:

an information collecting lens array panel having M*N lenses with parallel optical axes and consistent imaging parameters, wherein, M and N are integers larger than 1, the information collecting lens array panel is used for performing M*N spatial spectrum image $I_{mn}$ sampling collecting on an object O to be three-dimensionally displayed, m is from 1 to M, n is from 1 to N, a spatial sampling angle is $\omega_{mn}=d_1/l_1$, d1 is a center distance between all lenses and $l_1$ is a distance between the information collecting lens array panel and the object O;
a photosensitive element array, which is arranged at one side of the information collecting lens array panel opposite to the object, has M*N photosensitive elements and is used for recording the spatial spectrum image $I_{mn}$ collected by each lens, wherein a resolution of each photosensitive element is not smaller than a preset number J*K of hoxels $H_{jk}$ of the object O in an object space, J and K are integers larger than 1, and the spatial spectrum image $I_{mn}$ is represented as $I_{mn}(j, k)$, j is from 1 to J and k is from 1 to K;
wherein the spatial spectrum holographic coding apparatus performs holographic coding on M*N spatial spectrum image $I_{mn}(j, k)$, wherein for one hoxel $H_{jk}$ of the object O, the (j,k)th pixel $P_{mnjk}$ in each spatial spectrum image $I_{mn}(j,k)$ is sequentially combined into one M*N array image $S_{jk}$ as a holographic coding image of the hoxel $H_{jk}$, and in this way, the spatial spectrum holographic coding image $S_{jk}(m, n)$ of the J*K hoxels of the object O is obtained;

the discrete spatial spectrum restoring apparatus includes:

a flat panel display, used for displaying the J*K spatial spectrum holographic coding image $S_{jk}(m, n)$ subjected to proper zooming, and having a resolution not lower than M*N*J*K;
an information restoring lens array panel, having J*K lenses with parallel optical axes and consistent imaging parameters, and used for restoring each spatial spectrum holographic coding image $S_{jk}(m, n)$ on the flat panel display into a three-dimensional image O' consisting of a dis-

crete spatial spectrum $I_{mn}(j, k)$ of the object O; and

a holographic function screen, which is arranged at one side of the information restoring lens array panel opposite to the flat panel display, wherein the holographic function screen has a regularly distributed micro spatial structure, which causes each spatial spectrum holographic coding image $S_{jk}(m, n)$ incident to the holographic function screen to have a corresponding spatial widening output, wherein a widening angle of each spatial spectrum holographic coding image $S_{jk}(m, n)$ is the spatial sampling angle $\omega_{mn}$, thereby causing each spatial spectrum holographic coding image $S_{jk}(m, n)$ to be joined with each other without overlapping coverage, so as to form a complete continuous spatial spectrum output,

wherein, the spatial sampling angle $\omega_{mn} = d_1/l_1 = d_2/l_2$, $d_2$ is a center distance between all lenses of the information restoring array panel and $l_2$ is a distance between the information restoring lens array panel and the holographic function screen.

2. The holographic three-dimensional display system according to claim 1, **characterized by** further comprising: an information collecting field diaphragm between the information collecting lens array panel and the photosensitive element, so as to reduce or eliminate imaging interference among respective lenses of the information collecting lens array panel.

3. The holographic three-dimensional display system according to claim1, **characterized by** further comprising a restoring field diaphragm between the information restoring lens array panel and the holographic function screen so as to eliminate or reduce the imaging interference between all lenses of the information restoring lens array panel.

4. The holographic three-dimensional display system according toclaim 1, **characterized in that** a field of view $\Omega$ between each lens of the information collecting lens array panel and each lens of the information restoring lens array panel is equal, $\tan(\Omega/2) = a_1/2f_1 = a_2/2f_2$, wherein $a_1$ is the aperture of each lens of the information collecting lens array panel, $f_1$ is a focus length of the each lens of the information collecting lens array panel, $a_2$ is the aperture of the information restoring lens array panel, and $f_2$ is a focus length of the information restoring lens array panel.

5. The holographic three-dimensional display system according to claim1, **characterized in that** a distance between the holographic function screen and the information collecting lens array panel is equal to a distance between a reference surface $P_R$ in an object space of the hoxels of the object O and the object O or the zoomed in or zoomed out distance between the reference surface $P_R$ and the object O.

6. The holographic three-dimensional display system according to any one of claims 1 to 5, **characterized in that** the center of the information collecting lens array panel at least has a lens capable of collecting a panorama of the object.

7. The holographic three-dimensional display system according to any one of claims 1 to 5, **characterized in that** each lens of the information restoring lens array panel is in a cellular array manner.

8. A holographic three-dimensional display method, **characterized by** comprising: a spatial spectrum parallel collecting process, a spatial spectrum holographic coding process and a discrete spatial spectrum restoring process;

the spatial spectrum parallel collecting process includes following steps:

performing M*N spatial spectrum image $I_{mn}$ sampling collecting on an object O to be three-dimensionally displayed by an information collecting lens array panel, wherein the information collecting lens array panel has M*N lenses with parallel optical axes and consistent imaging parameters, M and N are integers larger than 1, m is from 1 to M, n is from 1 to N, a spatial sampling angle is $\omega_{mn} = d_1/l_1$, d1 is a center distance between all lenses and $l_1$ is the distance between the information collecting lens array panel and the object O;

recording the spatial spectrum image $I_{mn}$ collected by each lens through a photosensitive element array, wherein the photosensitive element array is arranged at one side of the information collecting lens array panel opposite to the object and has M*N photosensitive elements, a resolution of each photosensitive element is not smaller than a preset number J*K of hoxels $H_{jk}$ of the object O in an object space, J and K are integers larger than 1, and the spatial spectrum image $I_{mn}$ is represented as $I_{mn}(j, k)$, j is from 1 to J and k is from 1 to K; and

the spatial spectrum holographic coding process comprises a step: performing holographic coding on M*N spatial spectrum image $I_{mn}(j, k)$, wherein for one hoxel $H_{jk}$ of the object O, the (j, k)th pixel $P_{mnjk}$ in each spatial spectrum image $I_{mn}(j,k)$ is sequentially combined into one M*N array image $S_{jk}$ as a holographic coding image of the hoxel $H_{jk}$, and in this way, the spatial spectrum holographic coding image $S_{jk}(m, n)$ of the J*K hoxels of the object O is obtained;

the discrete spatial spectrum restoring process includes following steps:

displaying the J*K spatial spectrum holographic coding image $S_{jk}(m, n)$ subjected to proper zooming by a flat panel display, wherein the flat panel display has a resolution not lower than M*N*J*K;

restoring each spatial spectrum holographic coding image $S_{jk}(m, n)$ on the flat panel display into a three-dimensional image O' consisting of a discrete spatial spectrum $I_{mn}(j, k)$ of the object O by an information restoring lens array panel, wherein the information restoring lens array panel has J*K lenses $a_2$ with parallel optical axes and consistent imaging parameters; and

causing each spatial spectrum holographic coding image $S_{jk}(m, n)$ incident to the holographic function screen to have a corresponding spatial widening output by a holographic function screen which is arranged at one side of the information restoring lens array panel opposite to the flat panel display and has a regularly distributed micro spatial structure, wherein a widening angle of each spatial spectrum holographic coding image $S_{jk}(m, n)$ is the spatial sampling angle $\omega_{mn}$, thereby causing each spatial spectrum holographic coding image $S_{jk}(m, n)$ to be joined with each other without overlapping coverage, so as to form a complete continuous spatial spectrum output,

wherein, the spatial sampling angle $\omega_{mn}=d_1/l_1=d_2/l_2$, $d_2$ is a center distance between all lenses of the information restoring array panel and $l_2$ is a distance between the information restoring lens array panel and the holographic function screen.

9. The holographic three-dimensional display method according to claim 8, **characterized by** further comprising a following step: eliminating or reducing imaging interference among respective lenses of the information collecting lens array panel by an information collecting field diaphragm between the information collecting lens array panel and the photosensitive element.

10. The holographic three-dimensional display method according to claim 8, **characterized by** further comprising a following step: eliminating or reducing imaging interference between all lenses of the information restoring lens array panel by a restoring field diaphragm between the information restoring lens array panel and the holographic function screen.

11. The holographic three-dimensional display method according to claim 8, **characterized in that** a field of view $\Omega$ between each lens of the information collecting lens array panel and each lens of the information restoring lens array panel is equal, $\tan(\Omega/2)=a_1/2f_1=a_2/2f_2$, wherein $a_1$ is the aperture of each lens of the information collecting lens array panel, $f_1$ is a focus length of the each lens of the information collecting lens array panel, $a_2$ is the aperture of the information restoring lens array panel, and $f_2$ is a focus length of the information restoring lens array panel.

12. The holographic three-dimensional display method according to claim 8, **characterized in that** a distance between the holographic function screen and the information collecting lens array panel is equal to a distance between a reference surface $P_R$ in an object space of the hoxels of the object O and the object O or the zoomed in or zoomed out distance between the reference surface $P_R$ and the object O.

13. The holographic three-dimensional display system according to any one of claims 8 to 12, **characterized in that** the center of the information collecting lens array panel at least has a lens capable of collecting a panorama of the object.

14. The holographic three-dimensional display system according to any one of claims 8 to 12, **characterized in that** each lens of the information restoring lens array panel is in a cellular array manner.

FIG.1

EP 3 086 185 A1

FIG.2

12

FIG.3

$$S_{jk}$$

FIG.4

FIG.5

FIG.6

FIG.7

10.00 mm

FIG.8

FIG.9

FIG.10

| 100<br>Spatial spectrum parallel<br>collecting apparatus | 200<br>Spatial spectrum<br>holographic coding<br>apparatus | 300<br>Discrete spatial spectrum<br>restoring apparatus |
| --- | --- | --- |

FIG.11

## INTERNATIONAL SEARCH REPORT

| International application No. |
|---|
| PCT/CN2014/087594 |

**A. CLASSIFICATION OF SUBJECT MATTER**

G03H 1/04 (2006.01) i; G03H 1/22 (2006.01) i; G03B 35/00 (2006.01) i; G02B 27/22 (2006.01) i

According to International Patent Classification (IPC) or to both national classification and IPC

**B. FIELDS SEARCHED**

Minimum documentation searched (classification system followed by classification symbols)

G03H 1; G03B 35; G02B 27

Documentation searched other than minimum documentation to the extent that such documents are included in the fields searched

Electronic data base consulted during the international search (name of data base and, where practicable, search terms used)

CNABS, CPRSABS, DWPI, SIPOABS, JPABS, CNKI: 3D, three 1w dimension+, display, hologra+, lens

**C. DOCUMENTS CONSIDERED TO BE RELEVANT**

| Category* | Citation of document, with indication, where appropriate, of the relevant passages | Relevant to claim No. |
|---|---|---|
| A | WO 2010072067 A1 (AFC TECHNOLOGY CO LTD) 01 July 2010 (01.07.2010) description pages 17 to 19, claims 1, 3, and figures 17 to 29 | 1-14 |
| A | US 2014198364 A1 (KONYANG UNIVERSITY INDUSTRY ACADEMIC COOPERATION FOUNDATION) 17 July 2014 (17.07.2014) the whole document | 1-14 |
| A | US 2010066817 A1 (HUMANEYES TECHNOLOGIES LTD) 18 March 2010 (18.03.2010) the whole document | 1-14 |
| A | JP 2010032818 A (NAT INST INF & COMM TECH) 12 February 2010 (12.02.2010) the whole document | 1-14 |
| A | JP 2005326610 A (MATSUSHITA ELECTRIC IND CO LTD) 24 November 2005 (24.11.2005) the whole document | 1-14 |

☒ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 March 2015 | 03 April 2015 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer LIU, Changli Telephone No. (86-10) 62085620 |
|---|---|

Form PCT/ISA /210 (second sheet) (July 2009)

**INTERNATIONAL SEARCH REPORT**

| | International application No. |
|---|---|
| | PCT/CN2014/087594 |

C (Continuation).     DOCUMENTS CONSIDERED TO BE RELEVANT

| Category* | Citation of document, with indication, where appropriate, of the relevant passages | Relevant to claim No. |
|---|---|---|
| A | CN 101661265 A (HARBIN NORMAL UNIVERSITY) 03 March 2010 (03.03.2010) the whole document | 1-14 |

Form PCT/ISA /210 (continuation of second sheet) (July 2009)

**INTERNATIONAL SEARCH REPORT**
Information on patent family members

International application No.

PCT/CN2014/087594

| Patent Documents referred in the Report | Publication Date | Patent Family | Publication Date |
|---|---|---|---|
| WO 2010072067 A1 | 01 July 2010 | CN 101939703 B | 31 August 2011 |
| | | EP 2372469 A1 | 05 October 2011 |
| | | CN 101939703 A | 05 January 2011 |
| | | US 8890932 B2 | 18 November 2014 |
| | | WO 2010072066 A1 | 01 July 2010 |
| | | WO 2010072065 A1 | 01 July 2010 |
| | | CN 101918901 B | 19 September 2012 |
| | | CN 101918901 A | 15 December 2010 |
| | | US 2011254916 A1 | 20 October 2011 |
| | | CN 101855600 B | 04 January 2012 |
| | | CN 101855600 A | 06 October 2010 |
| | | EP 2372469 A4 | 30 May 2012 |
| | | JP 2012514214 A | 21 June 2012 |
| US 2014198364 A1 | 17 July 2014 | KR 101441785 B1 | 22 September 2014 |
| | | KR 20140091252 A | 21 July 2014 |
| US 2010066817 A1 | 18 March 2010 | JP 2010521081 A | 17 June 2010 |
| | | WO 2008102366 A2 | 28 August 2008 |
| | | EP 2122409 A2 | 25 November 2009 |
| | | WO 2008102366 A3 | 31 December 2008 |
| | | US 8520060 B2 | 27 August 2013 |
| | | JP 520546 B2 | 05 June 2013 |
| JP 2010032818 A | 12 February 2010 | JP 5019541 B2 | 05 September 2012 |
| JP 2005326610 A | 24 November 2005 | JP 4492208 B2 | 30 June 2010 |
| CN 101661265 A | 03 March 2010 | CN 101661265 B | 05 January 2011 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010072065 A
- WO 2010072066 A

- WO 2010072067 A

**Non-patent literature cited in the description**

- *APPLIED OPTICS,* 01 February 2013, vol. 52 (4